# EUROPEAN PATENT APPLICATION

(11) **EP 4 729 819 A1**
(43) Date of publication of application: **22.04.2026**
(21) Application number: 24848966.8
(22) Date of filing: 19.07.2024
(51) Int. Cl.: F16L 19/00, B01J 19/00, F16L 17/067

(54) **CONNECTOR, CONNECTION STRUCTURE, CONNECTION METHOD, AND FLUID SYSTEM**

(30) Priority: 31.07.2023 JP 2023125048
(71) Applicant: IMT Taiwan Co., Ltd., Hsinchu City, 30013 (TW); Institute Of Microchemical Technology Co., Ltd., Kawasaki-shi, Kanagawa 212-0032 (JP)
(72) Inventor: SANO Hiroki, Hsinchu City 30013 (TW); KITAMORI Takehiko, Hsinchu City 30013 (TW); KONISHI Katsunori, Hsinchu City 30013 (TW); OHTA Ryoichi, Kawasaki-shi Kanagawa 212-0032 (JP); LIN Yenchen, Hsinchu City 30013 (TW); CHEN Chihchen, Hsinchu City 30013 (TW); ENDO Yoshishige, Hsinchu City 30013 (TW)
(74) Representative: Scott, Stephen John
(86) International application number: PCT/JP2024/026044
(87) International publication number: WO 2025/028311

(57) **Abstract**

A connector of the present disclosure connects a tip portion of a tube to an opening of a flow channel provided on a side surface of a fluidic device having a flow channel formed therein. The connector includes a ferrule, a pressing member, and a sealing member. The ferrule has a first surface facing the side surface of the fluidic device at a first end along the through hole through which the tube is inserted, and a tapered second surface at a second end. The pressing member is a cylindrical member having a through hole formed therein through which the tube is inserted, and has a recess that can come into contact with the second surface of the ferrule. The sealing member is disposed between the first surface of the ferrule and the side surface of the fluidic device, and the tube is inserted through the sealing member. The pressing member presses the ferrule toward the fluidic device, thereby connecting the opening of the flow channel and the tip portion of the tube.

## Description

### CROSS-REFERENCE TO RELATED APPLICATION

The present application claims priority to and the benefit of Japanese Patent Application No. 2023-125048 filed July 31, 2023, the entire contents of which are incorporated herein by reference.

### TECHNICAL FIELD

The present disclosure relates to a connector, a connection structure, and a connection method for connecting a fluidic device to a tube for fluid transport, and to a fluidic system that connects a plurality of fluidic devices using the connector and the connection structure.

### BACKGROUND

A method has been proposed for fluidically connecting a plurality of microfluidic devices to each other via tubes for fluid transport, by connecting to openings of flow channels provided in side surfaces of substrates of microfluidic devices in which flow channels are formed. The tubes are connected to the openings of the microfluidic devices using connectors. For example, Non-Patent Literature (NPL) 1 describes a connector into which a plurality of tubes is inserted, tip portions of the tubes being arranged to penetrate a sealing material such as rubber. When such a connector is connected to a microfluidic device, the connector is screwed onto the microfluidic device with the tip of a tube abutting against an inlet or outlet on a side surface of the microfluidic device so that a flow channel is connected to the inlet or outlet. At this time, the sealing material is deformed and expanded by pressure applied from the connector, and seals a connection portion between the flow channel of the microfluidic device and the flow channel of the tube to avoid leakage.

### CITATION LIST

### Non-Patent Literature

NPL 1: The Dolomite Centre Ltd. (UK) / Dolomite Microfluidics (USA), "Linear Connectors", [online], MAR-000026 Revision 1.5, [Retrieved July 10, 2023], Internet <URL: https://go.blacktrace.com/1/659183/2019-01-08/12s/659183/3287/Dolomite_LinearConnectorsDatasheet_pdf.pdf>

### SUMMARY

### (Technical Problem)

According to the method of NPL 1, there is a risk of liquid leakage occurring when the pressure of liquid in the flow channel is high. For example, according to the method of NPL 1, there are cases where sealing of liquid is insufficient between the sealing material and the side surface of the substrate, and between the sealing material and an outer circumferential surface of a tube. Further, according to the method of NPL 1, a plurality of tubes are collectively connected to a microfluidic device with a single connector, so it is not possible to individually adjust a pressing force at a connection portion between a tube and the microfluidic device.

Accordingly, with attention to these points in mind, it would be helpful to provide a technology for connecting a fluidic device and a tube for fluid transport at a side surface of the fluidic device while helping prevent liquid leakage.

### (Solution to Problem)

(1) A connector according to an aspect of the present disclosure is a connector configured to connect an opening of a flow channel provided in a side surface of a fluidic device having a plate-like shape and the flow channel formed therein to a tip portion of a tube for flow channel connection, the connector comprising: a ferrule that has a through hole through which the tube is inserted, a first surface configured to face the side surface of the fluidic device at a first end along the through hole, and a second surface that is tapered and has an outer diameter that decreases toward a second end opposite the first end along the through hole; a pressing member that is cylindrical and has a through hole through which the tube is inserted and a recess configured to come into contact with the second surface of the ferrule; and a sealing member disposed between the first surface of the ferrule and the side surface of the fluidic device, through which the tube is inserted, wherein the pressing member is configured so that the opening and the tip portion are connected by the pressing member pressing the ferrule toward the fluidic device.
(2) The connector according to (1), wherein the pressing member further comprises a threaded portion configured to thread into a screw hole disposed at a position corresponding to the opening of a holder that fixes the fluidic device, and the pressing member is configured to advance toward the fluidic device by rotation in a direction in which the threaded portion threads into the screw hole, thereby pressing the ferrule toward the fluidic device.
(3) The connector according to (1) or (2), wherein the ferrule is configured to be pressed against the fluidic device by the pressing member, with the sealing member pressed between the first surface and the side surface of the fluidic device, and to deform due to the pressing force applied to the second surface, thereby clamping and fixing the tube.
(4) The connector according to (3) or (4), wherein the ferrule is configured to provide a fluid seal between the ferrule and the tube when the tube is fixed.
(5) The connectors according to any one of (1) to (4), wherein the sealing member is an O-ring.
(6) A connection structure according to an aspect of the present disclosure is a connection structure configured to connect an opening of a flow channel provided in a side surface of a fluidic device having a plate-like shape and the flow channel formed therein to a tip portion of a tube for flow channel connection, the connection structure comprising: a holder configured to fix the fluidic device that has a screw hole disposed at a position corresponding to the opening; a ferrule that has a through hole through which the tube is inserted, a first surface configured to face the side surface of the fluidic device at a first end along the through hole, and a second surface that is tapered and has an outer diameter that decreases toward a second end opposite the first end along the through hole; a pressing member that is cylindrical and comprises a threaded portion configured to screw into the screw hole of the holder, a through hole through which the tube is inserted, and a recess configured to come into contact with the second surface of the ferrule; and a sealing member through which the tube is inserted, disposed between the first surface of the ferrule and the side surface of the fluidic device.
(7) A connection method according to an aspect of the present disclosure is a connection method of connecting an opening of a flow channel provided in a side surface of a fluidic device having a plate-like shape and the flow channel formed therein to a tip portion of a tube for flow channel connection, the connection method comprising: fixing the fluidic device using a holder that has a screw hole disposed at a position corresponding to the opening, wherein the tube is inserted through a pressing member, a ferrule, and a sealing member, the pressing member is cylindrical and comprises a threaded portion configured to screw into the screw hole of the holder, a through hole through which the tube is inserted, and a recess on the side of the ferrule, the ferrule has a through hole through which the tube is inserted, a first surface configured to face the side surface of the fluidic device on a side of the sealing member, and a second surface that is tapered and has an outer diameter that decreases toward an end on the side of the pressing member, and the sealing member is disposed between the first surface of the ferrule and the side surface of the fluidic device; the pressing member is rotated in a direction in which the threaded portion is screwed into the screw hole, thereby causing the pressing member to advance toward the fluidic device, causing the recess to press the second surface of the ferrule toward the fluidic device; and with the first surface of the ferrule pressing the sealing member toward the side surface of the fluidic device, the ferrule is deformed by a pressing force applied to the second surface, thereby clamping and fixing the tube.
(8) One variation of fluidic system disclosed herein comprises two or more fluidic devices each having an opening located on a side surface thereof connected using the connector according to (1) and the tube, wherein the fluidic devices are disposed at different positions in a direction perpendicular to a plane along which the fluidic devices extend.

### (Advantageous Effect)

According to the present disclosure, a fluidic device and a tube for fluid transport can be connected at a side surface of the fluidic device while helping prevent liquid leakage.

### BRIEF DESCRIPTION OF THE DRAWINGS

In the accompanying drawings:
FIG. 1 is a plan view diagram illustrating a schematic configuration of a connection structure that connects a flow channel of a fluidic device and a tube according to an embodiment;
FIG. 2 is a cross-section diagram illustrating a connector portion of FIG. 1 in more detail;
FIG. 3 is a diagram illustrating configuration of a connector before being connected to a fluidic device;
FIG. 4 is a flowchart illustrating a method of connecting a fluidic device to a tube;
FIG. 5 is a diagram illustrating configuration of a fluidic system in which fluidic devices are connected in series in a plane;
FIG. 6 is a diagram illustrating configuration of a fluidic system in which fluidic devices are connected in series in three dimensions; and
FIG. 7 is a diagram for explaining a connected state of fluidic devices according to conventional technology.

### DETAILED DESCRIPTION

Technology of mixing liquids and/or carrying out reactions and the like using a fluidic device including a microscopic flow channel having a flow channel width of up to about 500 µm offers various advantages that could not be obtained with conventional fluidic devices having a flow channel width of some mm or more. For example, in a mixing operation, it is known that when the flow channel width is reduced to 1/10 of that of conventional technology, mixing time is reduced to about 1/100. Accordingly, an operation that would have taken an hour with conventional technology can be completed in less than one minute. Further, in a reaction operation, the reaction is completed instantly, suppressing production of byproducts and significantly improving reaction yield.

When fluidic devices are interconnected to carry out a multi-stage operation on a fluid, a liquid outlet of an upstream fluidic device is sequentially connected to a fluid inlet of a downstream fluidic device. Tubes made of polyether ether ketone (PEEK) resin are relatively often used to connect outlets and inlets from the viewpoints of chemical resistance, heat resistance, pressure resistance, and the like. However, in a typical fluidic device, an inlet and an outlet are provided on a surface above a substrate plane of a horizontally disposed substrate. For this reason, when connecting an inlet and an outlet using a tube made of PEEK resin, which is highly rigid and difficult to bend, it is necessary to maintain a certain distance between fluidic devices.

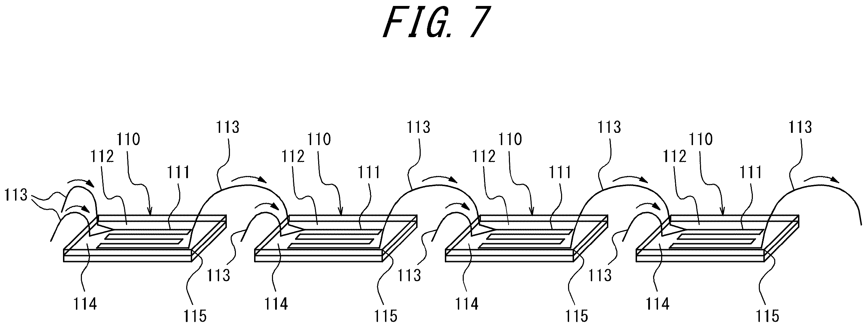

FIG. 7 illustrates a fluidic system in which a fluidic device 110 is connected according to conventional technology. In the example of FIG. 7, the fluidic devices 110, each having a flow channel 111 formed therein, are connected by openings such as outlets and inlets provided on upper portions of substrate surfaces 112 of the fluidic devices 110 using tubes 113. A lower limit of spacing between adjacent microfluidic devices 110 is limited by a distance over which the tubes 113 can be bent 180 degrees between an outlet 115 of an upstream microfluidic device 110 and an inlet 114 of a downstream microfluidic device 110.

Further, when the spacing between the fluidic devices 110 is large, then in order to secure a yield of reaction products it becomes difficult to achieve high-density implementation even when increasing the number of the fluidic devices 110 connected in series by further connecting in parallel. Further, when the tubes 113 for connecting the flow channels becomes long, there is a problem in that it becomes difficult to precisely control a temperature of the liquid to be processed.

Therefore, providing an inlet and an outlet for liquid on a side surface of a fluidic device and connecting these to each other is advantageous in terms of constructing a compact fluidic system in which a plurality of fluidic devices are connected. Hereinafter, side surface of a fluidic device refers to any of the four surfaces other than the two largest surfaces facing each other of a substrate constituting a microfluidic device.

### (Connection structure between fluidic device and tube)

Embodiments of the present disclosure are described below with reference to the drawings.

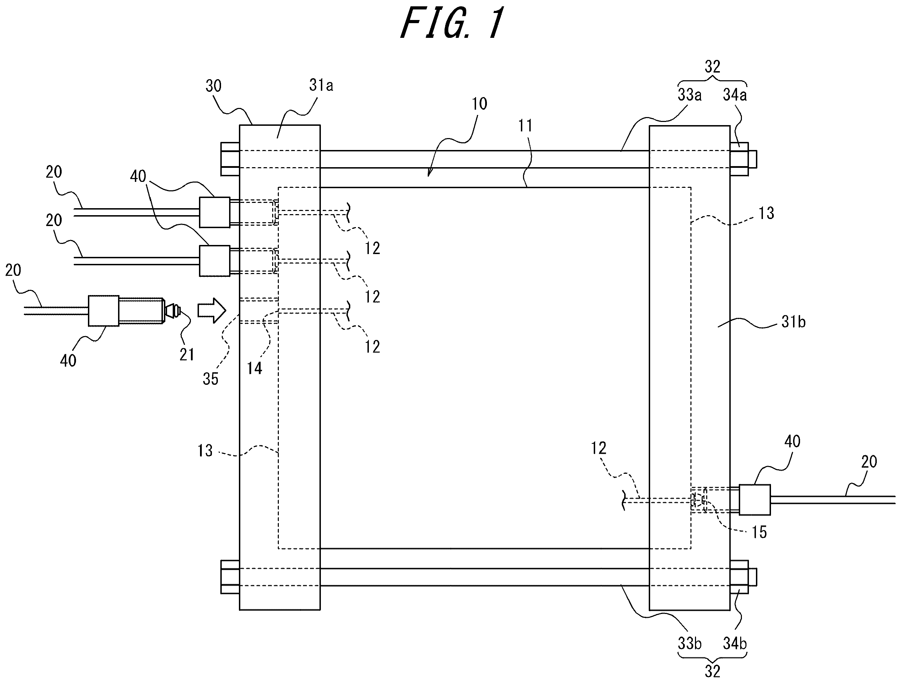

A connection structure connecting a fluidic device 10 and a tube 20 for fluid transport according to an embodiment of the present disclosure includes a holder 30 for fixing the fluidic device 10 and a connector 40 for connecting the fluidic device 10 held by the holder 30 to the tube 20, as illustrated in FIG. 1.

The fluidic device 10 includes a substrate 11 and a flow channel 12 formed inside the substrate 11. In FIG. 1, the substrate 11 is a rectangular plate-like member in plan view. However, the shape of the substrate 11 is not limited to this example. The size of the substrate 11 may be set arbitrarily. For example, the size of the substrate can be on the order of some cm to some tens of cm in plan view. Further, thickness of the substrate can be on the order of some mm to some cm. Further, material of the substrate 11 is not particularly limited, and may be, for example, glass, silicon, silica, quartz, resin, or silicon carbide.

The flow channel 12 is, for example, a minute micro-flow channel having a flow channel width on the order of µm. However, the width of the flow channel 12 is not limited to this range. The flow channel 12 allows a fluid to pass from the upstream side to the downstream side. In FIG. 1, the flow channels 12 between the upstream side and the downstream side of the fluidic device 10 are not illustrated. An inlet 14 is provided on a side surface 13 of the substrate 11 at an end on the upstream side of the flow channel 12. An outlet 15 is provided on a side surface 13 of the substrate 11 at an end on the downstream side of the flow channel 12. The inlet 14 is an opening that receives liquid supplied to the fluidic device 10 from outside. The outlet 15 is an opening for discharging fluid that has flowed through the flow channel 12 of the fluidic device 10 to outside of the fluidic device 10.

The flow channels 12 of the fluidic device 10 illustrated in FIG. 1 sequentially mix liquids flowing in from, for example, three inlets 14 on the upstream side, cause reaction components to react, and discharge a product from the outlet 15. Accordingly, the flow channels 12 connected to the three inlets 14 may be configured to merge sequentially to form one flow channel, which snakes through the substrate 11 and connects to the outlet 15. However, the shape of the flow channels 12, and the number and arrangement of the inlets 14 and the outlet 15 are not limited to this example, and can be freely designed depending on the operations such as mixing and chemical reactions carried out by the fluidic device 10.

The fluidic device 10 may be produced, for example, by heat-sealing a glass plate onto a glass substrate in which the flow channel 12 has been formed having a groove shape, thereby forming an airtight space, and then cutting to a defined size using a dicer or the like. The inlet 14 and the outlet 15 of the flow channel 12 are formed at end surfaces cut by the dicer. The flow channel 12 may be formed in the glass substrate by a variety of processing methods that may be selected depending on the shape of the flow channel 12, that is, flow channel width, depth, and length. For example, when the fluidic device 10 is made of glass and the flow channel width is 100 µm or less, etching is used. On the other hand, when the flow channel width is 200 µm or more, a mechanical processing method or a laser processing and embossing method is used.

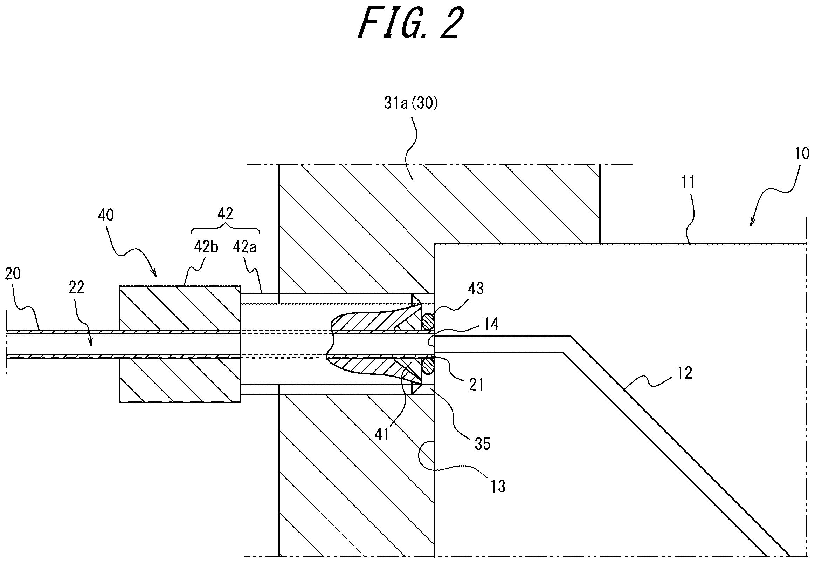

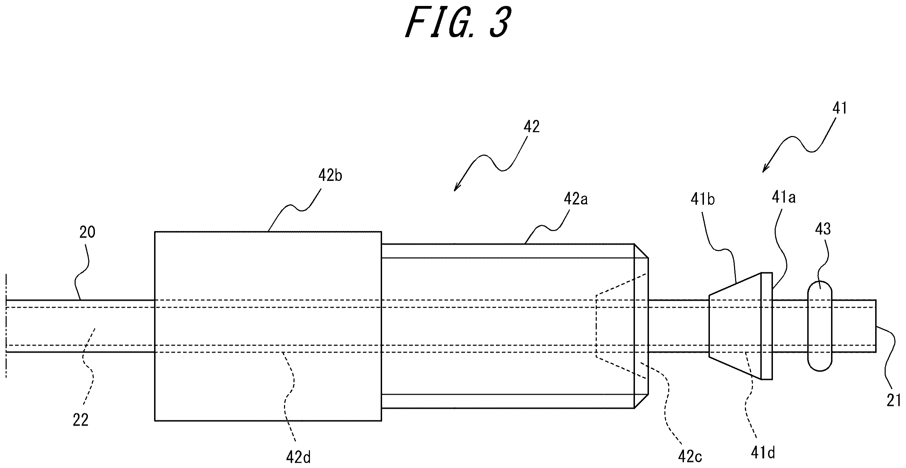

As illustrated in FIG. 2 and FIG. 3, the tube 20 includes a flow channel 22 for transporting a liquid to be supplied to the flow channel 12 of the fluidic device 10 and/or a liquid discharged from the flow channel 12. The tubes 20 connect the fluidic devices 10 to each other, or to a liquid supply device that supplies a liquid raw material to a fluidic device 10, or to a tank that stores a product produced by a fluidic device 10. A diameter of the flow channel 22 of the tube 20 may be larger than a width of the flow channel 12 of the fluidic device 10. A tip portion 21 of the tube 20 may have a flat surface that is perpendicular to a central axis of the tube.

Material of the tube 20 may be selected taking into consideration various conditions such as a type of liquid used, a temperature of the liquid, and a pressure applied to the flow channel 22 in the tube 20. As the material for the tube 20, PEEK resin, which has excellent chemical resistance, heat resistance, pressure resistance, and the like, as well as fluororesins such as perfluoroalkoxy alkane (PFA) and polytetrafluoroethylene (PTFE), are often used.

As illustrated in FIG. 1, the holder 30 includes two holding members 31a and 31b, which respectively accommodate one of two opposing side surfaces 13 of the substrate 11 of the fluidic device 10, and sandwiches and holds the substrate 11. The holding members 31a and 31b may be made of a high-strength material such as PEEK resin. The holding members 31a and 31b each have a groove formed therein that accommodates an end portion including one side surface 13 of the substrate 11, and are configured so that when the substrate 11 is fixed to the holder 30, the substrate 11 is accurately positioned relative to the holding members 31a and 31b.

The holding members 31a and 31b are fixed by fastening members 32 in a state where the end portions of the substrate 11 are fitted into respective grooves and the substrate 11 is sandwiched from both sides. For example, the holding members 31a and 31b are provided with two pairs of through holes facing each other, each pair being at both end portions in the direction in which the groove extends, outside a portion where the substrate is accommodated. The holding member 31a and the holding member 31b are fixed by two long bolts 33a, 33b that pass through the respective through holes and nuts 34a, 34b. In this case, the long bolts 33a, 33b and the nuts 34a, 34b constitute the fastening members 32.

Each of the two holding members 31a, 31b is provided with a screw hole 35 having a thread formed on the inside thereof, corresponding to the position of an inlet 14 and/or an outlet 15 of the fluidic device 10. Each of the screw holes 35 extends in a direction perpendicular to the side surface 13 of the substrate 11 from a position where the inlet 14 or the outlet 15 is positioned when the fluidic device 10 is fixed to the holder 30. As illustrated in FIG. 2, by connecting the connector 40 to the screw hole 35 of the holder 30, the flow channel 22 of the tube 20 is fluidically connected to the flow channel 12 of the fluidic device 10. In FIG. 2, the screw hole 35 has a thread formed over the entirety of the inner circumference thereof, but the thread may be formed only in a portion of the screw hole 35.

The configuration of the connector 40 is described with reference to FIG. 2 and FIG. 3. FIG. 2 illustrates a cross-section view of the connector 40 connected to the holder 30. FIG. 3 illustrates the connector 40 before connection to the holder 30. The connector 40 includes a ferrule 41, a pressing member 42, and an O-ring 43 that is a sealing member. The tube 20 is inserted through the pressing member 42, the ferrule 41, and the O-ring 43 in this order toward the tip portion 21. In this state, the connector 40 has a shape that is substantially rotationally symmetrical about a central axis of the tube 20.

The ferrule 41 has an approximately conical or truncated conical shape, and includes a first surface 41a that is flat and a second surface 41b that is tapered with an outer diameter decreasing toward an end opposite the first surface 41a. The ferrule 41 has a through hole 41d formed along a central axis of the conical or truncated conical shape, through which the tube 20 is inserted. An inner diameter of the through hole 41d is slightly larger than an outer diameter of the tube 20. The ferrule 41 is slidable along the direction in which the tube 20 extends when the tube 20 is inserted therethrough. When the ferrule 41 is connected to the holder 30, the first surface 41a is disposed at a first end, which is one end of the through hole 41d on the side of the substrate 11 of the fluidic device 10. The second surface of the ferrule 41 has a shape in which the outer diameter gradually decreases toward a second end, which is the other end of the through hole 41d. The ferrule 41 is made of a material that is chemical-resistant, examples including fluororesin such as Teflon^{®} (Teflon is a registered trademark in Japan, other countries, or both), polyimide, graphite, and the like, and can be deformed by compression. The first surface 41a of the ferrule 41 is not limited to being a flat surface. For example, the first surface 41a may be provided with a circular groove or recess for partially accommodating the O-ring 43.

The pressing member 42 is a cylindrical member including a threaded portion 42a that has a screw thread formed on an outer circumferential portion, and a manual rotation portion 42b having a knurled surface or the like. The threaded portion 42 a is configured to be screwed into the screw hole 35 of the holder 30. When the manual rotation portion 42b of the pressing member 42 is manually rotated, the threaded portion 42a is screwed into the screw hole 35 and the pressing member 42 is coupled to the holder 30. In FIG. 2 and FIG. 3, the threaded portion 42a has a thread formed over the entirety of the outer circumference, but the thread may be formed only on a portion of the portion that fits into the screw hole 35 of the pressing member 42. The portion that fits into the screw hole 35, including any portion where no thread is formed, is called the threaded portion 42a. The pressing member 42 has a through hole 42d along a central axis through which the tube 20 is inserted. An inner diameter of the through hole 42d is larger than the outer diameter of the tube 20 so that the pressing member 42 can rotate and slide relative to the tube 20.

A recess 42c is formed at a tip portion of the threaded portion 42a of the pressing member 42 on the side that is coupled to the holder 30, the recess 42c being recessed with the position of the through hole 42d as the center. The recess 42c has a shape that at least partially abuts against the second surface 41b of the ferrule 41 when the connector 40 is connected to the holder 30. The recess 42c may have a shape that corresponds to the tapered shape of the second surface 41b of the ferrule 41 and that fits with the second surface 41b. However, the recess 42c does not need to have a tapered surface that exactly conforms to the second surface 41b of the ferrule 41. The recess 42c may have a shape that takes into consideration the shape of the ferrule 41 after deformation. Further, the recess 42c may have any shape as long as it comes into contact with the second surface 41b from all directions around the through hole 41d. The shape of the recess 42c may be any shape that allows a radially inward pressing force to be applied uniformly to the second surface 41b of the ferrule 41 when the connector 40 is screwed into the holder 30.

The O-ring 43 is an elastic annular member made of, for example, rubber, that is disposed on the first surface side of the ferrule 41 when the tube 20 is inserted therethrough. When the connector 40 is connected to the holder 30, the O-ring 43 is pressed between the side surface 13 of the substrate 11 of the fluidic device 10 and the first surface 41a of the ferrule 41, causing deformation and expansion. As a result, the O-ring 43 seals the gap between the flow channel 12 of the fluidic device 10 and the flow channel 22 of the tube 20 so as to avoid leakage. The sealing member is not limited to being the O-ring 43. The connector 40 may use a gasket or other form of sealing member such as a rubber packing to seal between the side surface 13 of the fluidic device 10 and the first surface 41a of the ferrule 41.

### (Method of connecting fluidic device and tube)

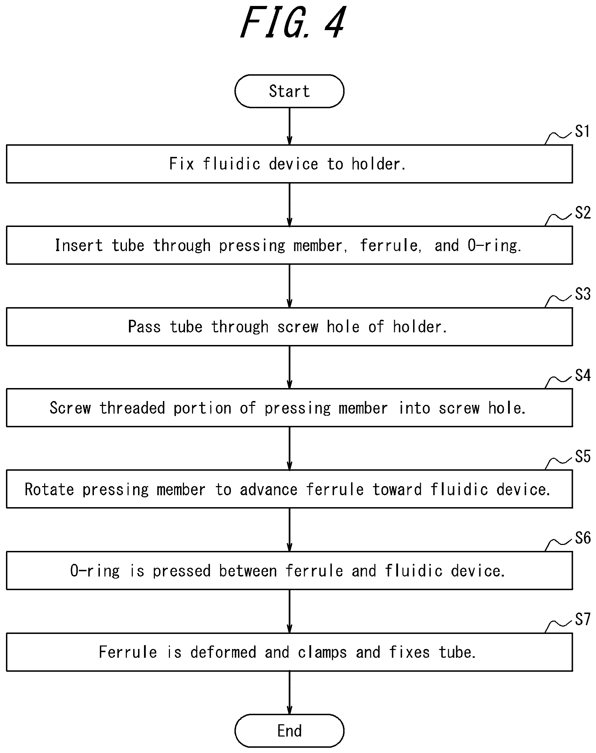

Next, referring to the flowchart of FIG. 4, we will explain a method of connecting an opening of the flow channel 12 of the fluidic device 10 using the connector 40 of the present disclosure, that is, the inlet 14 or the outlet 15, to the tip portion 21 of the tube 20.

First, a worker fixes the fluidic device 10 to the holder 30 (step S1). In this state, each opening of a flow channel 12 of the fluidic device 10 is substantially aligned with a center of an end of a screw hole 35 of the holder 30 on the side of the fluidic device 10.

The worker inserts the tube 20 through the pressing member 42, the ferrule 41, and the O-ring 43 (step S2). Step S2 may be carried out before step S1. The order of step S1 and step S2 does not matter.

The worker holds the manual rotation portion 42b of the pressing member 42 and passes the tube 20 through the screw hole 35 of the holder 30 (step S3). The worker presses the tip portion 21 of the tube 20 against the side surface 13 around the opening of the fluidic device 10. As a result, the flow channel 12 of the fluidic device 10 and the flow channel 22 of the tube 20 are connected. The following steps S4 to S7 are carried out with the tip portion 21 of the tube 20 abutting against the side surface 13 of the fluidic device 10.

The worker moves the pressing member 42 toward the holder 30, aligns the threaded portion 42a with the screw hole 35 of the holder 30, and rotates the manual rotation portion 42b to screw the threaded portion 42a into the screw hole 35 of the holder 30 (step S4).

The worker rotates the pressing member 42 in a direction in which the threaded portion 42a is engaged with the screw hole 35, to advance the pressing member 42 forward toward the fluidic device 10 (step S5). When the pressing member 42 advances toward the tip portion 21 of the tube 20 and abuts against the second surface 41b of the ferrule 41, the ferrule 41 is also pushed by the pressing member 42 and advances toward the fluidic device 10. Further, when the first surface 41a of the ferrule 41 abuts against the O-ring 43, the O-ring 43 is also pushed by the ferrule 41 and advances forward in the direction of the fluidic device 10. Further, when the worker rotates the manual rotation portion 42b, the O-ring 43 abuts against the side surface 13 of the fluidic device 10.

The worker further rotates the manual rotation portion 42b, thereby pressing the O-ring 43 between the first surface 41a of the ferrule 41 pressed by the pressing member 42 and the side surface 13 of the fluidic device 10 (step S6). The O-ring 43 when pressed is deformed as illustrated in FIG. 2. The pressure of the O-ring 43 pressing against the side surface 13 helps prevent liquid leakage at the contact portion between the O-ring 43 and the side surface 13. Similarly, leakage of liquid from the contact area between the O-ring 43 and the first surface 41a of the ferrule 41 can be prevented. As a result, leakage of liquid from the connection portion between the flow channel 12 of the fluidic device 10 and the flow channel 22 of the tube 20 to the outside of the O-ring 43 can be prevented. Further, by pressing the outer circumference of the tube 20, the O-ring 43 can help prevent liquid from leaking from the connection portion between the flow channel 12 of the fluidic device 10 and the flow channel 22 of the tube 20 to between the outer circumference of the tube 20 and the inner circumference of the through hole 41c of the ferrule 41.

When the worker further rotates the manual rotation portion 42b, the ferrule 41 is pressed against the fluidic device 10 by the pressing member 42. As a result, with the O-ring 43 pressed between the first surface 41a and the side surface 13 of the fluidic device 10, a pressing force having an inward component acts on the second surface 41b of the ferrule 41. As a result, the ferrule 41 is deformed and fixes the tube 20 in a state of being clamped inward (step S7). As a result, leakage between the outer periphery of the tube 20 and the through hole 42d of the ferrule 41 can be prevented. The pressing of the O-ring 43 in step S6 and the deformation of the ferrule in step S7 may occur in parallel rather than sequentially.

As described above, according to the connection method using the connector 40 of the present disclosure, when connecting the fluidic device 10 and the tube 20, in addition to sealing by the O-ring 43, which is a sealing member, the sealing effect caused by the deformation of the ferrule 41 can further help prevent liquid leakage. As a result, the connection method using the connector 40 of the present disclosure can be applied to the fluidic device 10 in which a higher pressure is applied to the flow channel 12.

Further, the connector 40 of the present disclosure is not part of a system in which a plurality of the tube 20 is connected with one connector, but rather the connector 40 is provided for each connection between each opening, such as the inlet 14 and outlet 15, and the tube 20. This makes it possible to adjust and manage the torque applied to the pressing member 42 for each individual connection so as to prevent leakage of liquid.

Further, in the connector 40 of the present disclosure, the tube 20 is inserted through the O-ring 43 and the tip portion 21 of the tube 20 is abutted against the side surface 13 of the fluidic device 10 and fixed. This helps prevent the O-ring 43 from moving or expanding, thereby narrowing the flow channel and helping prevent the tip portion 21 of the tube 20 from moving.

### (Fluidic system)

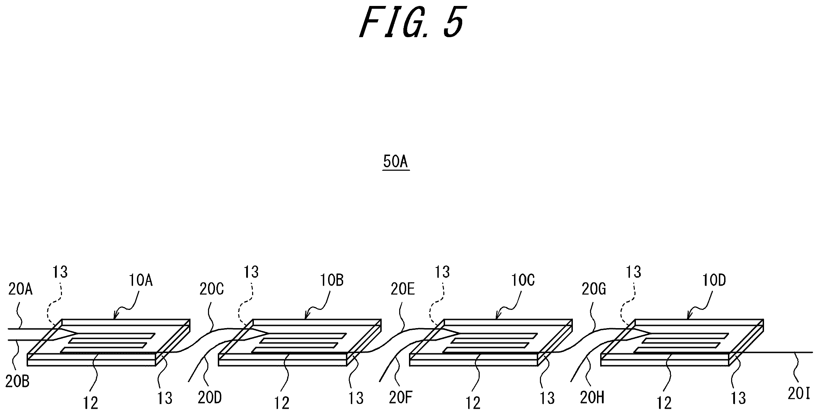

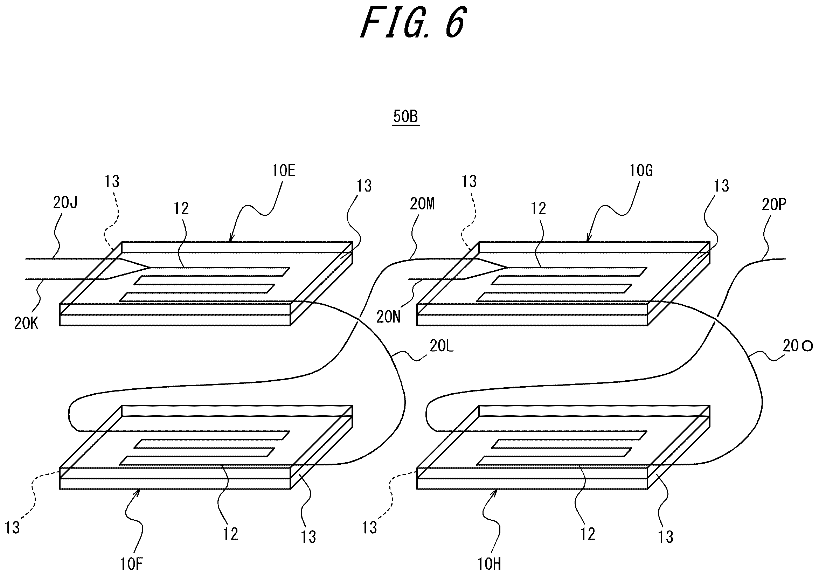

Next, fluidic systems 50A and 50B in which a plurality of the fluidic device 10 is connected in series using a connection structure including the connector 40 of the present disclosure is described. In FIG. 5 and FIG. 6, the holder 30 and the connector 40 are omitted, and primarily only the fluidic device 10 and the tube 20 are illustrated. In order to distinguish between the individual fluidic devices 10, they are referred to as fluidic devices 10A to 10H. Further, the individual tubes 20 are distinguished from one another by being designated as tubes 20A to 200. The inlets 14 and the outlets 15 are also omitted from illustration. In the following, two or more fluidic devices 10A to 10H may be collectively referred to as fluidic devices 10. Two or more of the tubes 20A to 200 may be collectively referred to as tubes 20.

The fluidic system 50A of FIG. 5 includes a plurality of the fluidic devices 10A to 10D arranged on the same plane, and the tubes 20A to 20I for transporting liquid introduced into and/or discharged from the fluidic devices 10A to 10D. The tubes 20A, 20B are connected to the inlets 14 provided on a side surface 13 of the fluidic device 10A, and supply liquid from, for example, a liquid supply device to the fluidic device 10A. The tube 20C connects an outlet 15 provided on a side surface 13 of the fluidic device 10A to an inlet 14 provided on a side surface 13 of the fluidic device 10B, and delivers the liquid processed and discharged by the fluidic device 10A to the fluidic device 10B. The tube 20D is connected to an inlet 14 provided on a side surface 13 of the fluidic device 10B, and supplies liquid from a liquid supply device or another fluidic device 10 to the fluidic device 10B. The fluidic devices 10B, 10C, 10D are similar to the fluidic device 10A, the tubes 20E, 20G are similar to the tube 20C, and the tubes 20F, 20H are similar to the tube 20D, and therefore description is omitted. The tube 20I is connected to an outlet 15 of the fluidic device 10D, and the liquid product after being processed by the fluidic device 10D is sent to a storage tank or the like.

The fluidic system 50A connects the outlets 15 and inlets 14 provided on opposing side surfaces 13 of adjacent fluidic devices 10A to 10D by the tubes 20C, 20E, 20G connected perpendicularly to the side surfaces 13. That is, the tubes 20C, 20E, 20D are connected such that the connectors 40 at both ends thereof extend in a direction along a surface on which each fluidic device 10 is placed. Therefore, in the fluidic system 50A, the tubes 20C, 20E, 20G do not need to be greatly curved between an outlet 15 of an upstream fluidic device 10 and an inlet 14 of a downstream fluidic device 10. As a result, in the fluidic system 50A, it is possible to set intervals between adjacent fluidic devices 10A to 10D to be short. Further, by arranging the outlet 15 and an inlet 14 at opposing positions on the side surfaces 13 of the adjacent fluidic devices 10A to 10D, it becomes possible to arrange the tubes 20C, 20E, 20G in a straight line. This allows the fluidic devices 10A to 10D to be spaced even closer together.

The fluidic system 50B of FIG. 6 includes four fluidic devices 10E to 10H arranged in three dimensions, and tubes 20J to 20P that transport liquid supplied to the fluidic devices 10E to 10H and/or liquid discharged from the fluidic devices 10E to 10H. The tubes 20J, 20K are similar to the tubes 20A, 20B of the fluidic system 50A of FIG. 5, and supply liquid from a liquid supply device or the like to the fluidic device 10E. The tubes 20L, 20M, 200 are similar to the tubes 20C, 20E, 20G of the fluidic system 50A of FIG. 5, and are respectively connected to the outlets 15 located on the side surfaces 13 of the upstream fluidic devices 10E, 10F, 10G, and to inlets 14 located on the side surfaces 13 of the downstream fluidic devices 10F, 10G, 10H. That is, the fluidic devices 10E and 10F, the fluidic devices 10F and 10G, and the fluidic devices 10G and 10H are connected at openings located on their respective side surfaces using the tubes 20L, 20M, 200. The tubes 20L, 20M, 200 transport the liquid that has been processed and discharged from the fluidic devices 10E, 10F, 10G, respectively, to the fluidic devices 10F, 10G, 10H. The tube 20N is similar to the tubes 20D, 20F, 20H in FIG. 5, and the tube 20P is similar to the tube 20I in FIG. 5, and therefore description is omitted.

In the fluidic system 50B, the fluidic devices 10E to 10H may be arranged, for example, in a rack having an upper and lower tier. That is, the fluidic devices 10E to 10H may be arranged at different positions not only horizontally but also vertically relative to one another. The vertical direction is a direction perpendicular to the plane on which the substrate 11 of the fluidic device 10 extends when the substrate 11 is placed horizontally. For example, the fluidic devices 10E, 10G are placed on an upper rack, and the fluidic devices 10F, 10H are placed on a lower rack. The tubes 20L, 200 respectively connect the outlets 15 of the fluidic devices 10E, 10G on the upper rack to inlets 14 of the fluidic devices 10F, 10H on the lower rack. The tube 20M connects the outlet 15 of the fluidic device 10F on the lower rack and an inlet 14 of the fluidic device 10G on the upper rack.

The tubes 20L, 20M, 200 are all connected perpendicularly to the side surfaces 13 of the fluidic devices 10E to 10H. Therefore, length of the tubes 20L, 20M, 200 can be made shorter than when, for example, one end is connected vertically to the top surface of the upper fluidic device and the other end is connected vertically to the top surface of the lower fluidic device and a tube is routed between them. According to prototypes made by the inventors, it was confirmed that when the fluidic devices 10 are arranged in two layers, one above the other, using the connection structure disclosed herein, the required spatial length can be reduced to approximately one-third compared to when the fluidic devices 10 are connected in series using a conventional technology connection method for fluidic devices. Further, according to conventional technology, the connector is connected perpendicular to the surface of the substrate, which inevitably requires a large space above the substrate. On the other hand, in the fluidic system 50B of the present disclosure, the connectors 40 are connected in a direction along the substrates 11 of the fluidic devices 10, and therefore the gaps between the upper fluidic devices 10 and the lower fluidic devices can be narrowed.

Further, when chemical reaction operations are carried out in fluidic devices, particularly microfluidic devices, precise temperature control is required. For example, in order to promote a chemical reaction in a short time, the temperature of the liquid may be increased to about 100 °C to 150 °C. However, when the tube 20 connecting the fluidic devices 10 is long, the liquid may be affected by external temperature when being transported through the tube 20. In the fluidic system 50B of the present disclosure, the length of the tube 20 can be made shorter than according to conventional technology, and therefore temperature changes in the liquid to be processed can be reduced.

In FIG. 5 and FIG. 6, the number of the fluidic devices 10 connected in series is four, but the number of the fluidic devices 10 is not limited to four. Further, a large number of the fluidic devices 10 can be connected in series. Further, when the fluidic devices 10 are arranged in three dimensions, the number of stages of the fluidic devices 10 in the height direction is not limited to two. The fluidic devices 10 can be arranged in even greater numbers of stages. Further, the fluidic system 50 can increase the yield of a product by increasing the number of sets of a plurality of the fluidic devices 10 connected in series, by further arranging a plurality of sets in parallel. In this way, even when arranging a large number of the fluidic devices 10, the fluidic system 50B of the present disclosure can be configured relatively compactly because the fluidic devices 10 can be arranged in the vertical direction and the spacing between the fluidic devices 10 can be narrowed.

The present disclosure is not limited to the above-described embodiments, and can be varied or modified in many ways. The configuration and the like of the connector, fluidic device, fluidic device connection structure, and fluidic system of the above-described embodiments are merely examples. Addition, omission, substitution, and other modifications of configuration are possible as appropriate within the scope of the present disclosure.

For example, in the above-described embodiments, the inlets 14 and the outlet 15 of the fluidic device are arranged on two opposing side surfaces 13 of the fluidic device 10 that is rectangular. However, positions of the inlets 14 and the outlet 15 are not limited to this. For example, the inlets 14 and the outlet 15 may be arranged on two, three, or four adjacent side surfaces of the fluidic device 10 that is rectangular. In each case, the holder 30 may be configured so that the connector 40 can be connected depending on the positions of the inlets 14 and the outlet 15.

Further, in the fluidic systems 50A, 50B of FIG. 5 and FIG. 6, a plurality of the fluidic devices 10 having similar structures are connected in series. However, the fluidic devices 10 connected in series need not have the same or similar structure. Each of the fluidic devices 10 may have a different structure.

Although the fluidic device 10 of the present disclosure has been described as a microfluidic device having a flow channel width on the order of µm, the dimensions of the flow channels of the fluidic device 10 of the present disclosure are not limited to this example. The fluidic device 10 may include a flow channel having a width of 1 mm or more, and may include a flow channel having a width of less than 1 µm.

In the above-described embodiments, the operations carried out by the fluidic device 10 include mixing and reaction of liquids. However, the operations carried out by the fluidic device 10 are not limited to these examples. Further, the fluid passing through the flow channels of the fluidic device 10 is not limited to liquids and may include gases. The operations carried out by the fluidic device 10 may include liquid-phase mixing, liquid-phase reaction, gas-liquid mixing, gas-liquid reaction, extraction, distillation, concentration, slurry mixing, solid-phase extraction, particle separation/liquid separation, crystallization, cell culturing, and the like.

### REFERENCE SIGNS LIST

- 10, 10A to 10H: fluidic devices
- 11: substrate
- 12: flow channel
- 13: side surface
- 14: inlet (opening)
- 15: outlet (opening)
- 20, 20A to 20P: tube
- 21: tip portion
- 22: flow channel
- 30: holder
- 31a, 31b: holding members
- 32: fastening members
- 33a, 33b: long bolts
- 34a, 34b: nuts
- 35: screw hole
- 40: connector
- 41: ferrule
- 41a: first surface
- 41b: second surface
- 41c: through hole
- 42: pressing member
- 42a: threaded portion
- 42b: manual rotation portion
- 42c: recess
- 42d: through hole
- 43: O-ring (sealing member)
- 50: fluidic system
- 110: fluidic device
- 111: flow channel
- 112: substrate surface
- 113: tube

## Claims

1. A connector configured to connect an opening of a flow channel provided in a side surface of a fluidic device having a plate-like shape and the flow channel formed therein to a tip portion of a tube for flow channel connection, the connector comprising:
a ferrule that has a through hole through which the tube is inserted, a first surface configured to face the side surface of the fluidic device at a first end along the through hole, and a second surface that is tapered and has an outer diameter that decreases toward a second end opposite the first end along the through hole;
a pressing member that is cylindrical and has a through hole through which the tube is inserted and a recess configured to come into contact with the second surface of the ferrule; and
a sealing member disposed between the first surface of the ferrule and the side surface of the fluidic device, through which the tube is inserted, wherein
the connector is configured so that the opening and the tip portion are connected by the pressing member pressing the ferrule toward the fluidic device.

2. The connector according to claim 1, wherein the pressing member further comprises a threaded portion configured to thread into a screw hole disposed at a position corresponding to the opening of a holder that fixes the fluidic device, and the pressing member is configured to advance toward the fluidic device by rotation in a direction in which the threaded portion threads into the screw hole, thereby pressing the ferrule toward the fluidic device.

3. The connector according to claim 1, wherein the ferrule is configured to be pressed against the fluidic device by the pressing member, with the sealing member pressed between the first surface and the side surface of the fluidic device, and to deform due to the pressing force applied to the second surface, thereby clamping and fixing the tube.

4. The connector according to claim 3, wherein the ferrule is configured to provide a fluid seal between the ferrule and the tube when the tube is fixed.

5. The connector according to claim 1, wherein the sealing member is an O-ring.

6. A connection structure configured to connect an opening of a flow channel provided in a side surface of a fluidic device having a plate-like shape and the flow channel formed therein to a tip portion of a tube for flow channel connection, the connection structure comprising:
a holder configured to fix the fluidic device, the holder having a screw hole disposed at a position corresponding to the opening;
a ferrule that has a through hole through which the tube is inserted, a first surface configured to face the side surface of the fluidic device at a first end along the through hole, and a second surface that is tapered and has an outer diameter that decreases toward a second end opposite the first end along the through hole;
a pressing member that is cylindrical and comprises a threaded portion configured to screw into the screw hole of the holder, a through hole through which the tube is inserted, and a recess configured to come into contact with the second surface of the ferrule; and
a sealing member through which the tube is inserted, disposed between the first surface of the ferrule and the side surface of the fluidic device.

7. A connection method of connecting an opening of a flow channel provided in a side surface of a fluidic device having a plate-like shape and the flow channel formed therein to a tip portion of a tube for flow channel connection, the connection method comprising:
fixing the fluidic device using a holder that has a screw hole disposed at a position corresponding to the opening, wherein
the tube is inserted through a pressing member, a ferrule, and a sealing member,
the pressing member is cylindrical and comprises a threaded portion configured to screw into the screw hole of the holder, a through hole through which the tube is inserted, and a recess on the side of the ferrule,
the ferrule has a through hole through which the tube is inserted, a first surface configured to face the side surface of the fluidic device on a side of the sealing member, and a second surface that is tapered and has an outer diameter that decreases toward an end on the side of the pressing member, and
the sealing member is disposed between the first surface of the ferrule and the side surface of the fluidic device;
the pressing member is rotated in a direction in which the threaded portion is screwed into the screw hole, thereby causing
the pressing member to advance toward the fluidic device, causing the recess to press the second surface of the ferrule toward the fluidic device; and
with the first surface of the ferrule pressing the sealing member toward the side surface of the fluidic device, the ferrule is deformed by a pressing force applied to the second surface, thereby clamping and fixing the tube.

8. A fluidic system comprising two or more fluidic devices each having an opening located on a side surface thereof connected using the connector according to claim 1 and the tube, wherein the fluidic devices are disposed at different positions in a direction perpendicular to a plane along which the fluidic devices extend.
